# EUROPÄISCHE PATENTSCHRIFT

(11) **EP 3 011 149 B1**
(45) Veröffentlichungstag und Bekanntmachung des Hinweises auf die Patenterteilung: **22.11.2017**
(21) Anmeldenummer: 14732087.3
(22) Anmeldetag: 16.06.2014
(51) Int. Cl.: F01M 13/04, F01L 1/047

(54) **OLABSCHEIDEEINRICHTUNG, INSBESONDERE FÜR EINE KURBELGEHÄUSEENTLÜFTUNG EINER BRENNKRAFTMASCHINE**
OIL SEPARATING DEVICE, IN PARTICULAR FOR CRANKCASE VENTING IN AN INTERNAL COMBUSTION ENGINE
DISPOSITIF SÉPARATEUR D'HUILE, EN PARTICULIER POUR L'AERATION D'UN CARTER DE VILEBREQUIN DE MOTEUR À COMBUSTION INTERNE

(30) Priorität: 18.06.2013 DE 102013106332
(43) Veröffentlichungstag der Anmeldung: 27.04.2016
(73) Patentinhaber: Thyssenkrupp Presta Teccenter Ag, 9492 Eschen (LI)
(72) Erfinder: REICHELT, Robert, 09669 Frankenberg/Sachsen (DE); MÜLLER, Ulf, 09116 Chemnitz (DE); MEUSEL, Jürgen, 09573 Dittmannsdorf (DE); JOKISCH, Ingo, 01097 Dresden (DE)
(74) Vertreter: thyssenkrupp Intellectual Property GmbH
(86) Internationale Anmeldenummer: PCT/EP2014/001625
(87) Internationale Veröffentlichungsnummer: WO 2014/202198

(56) Entgegenhaltungen:
- EP-A1- 2 597 277
- DE-A1-102005 042 720

## Beschreibung

Die vorliegende Erfindung betrifft eine Ölabscheideeinrichtung, insbesondere für eine Kurbelgehäuseentlüftung einer Brennkraftmaschine, mit einem sich in einer Längsachse axial erstreckenden Hohlkörper, der von einem mit Öl beladenen Gasstrom durchströmbar ist, wobei im Hohlkörper ein Ölabscheidering eingebracht ist, der vom Gasstrom anströmbar ist.

### STAND DER TECHNIK

Bei Verbrennungsmotoren und Kolbenverdichtern werden in der Praxis Leckageverluste beobachtet, die auf eine nicht vollständige Abdichtung beispielsweise des Kolben-Zylinderlaufes oder der Ventilführungen im Zylinderkopf zurückzuführen sind. Die Leckageverluste werden als Blowby-Gas bezeichnet und enthalten einen erheblichen Anteil an Öl. Bezogen auf Verbrennungsmotoren ist es deshalb üblich, das beim Betrieb der Brennkraftmaschine anfallende Blowby-Gas zurück in den Ansaugtrakt des Verbrennungsmotors zu leiten. Um einerseits den Ölverlust durch das Blowby-Gas zu minimieren und andererseits eine optimale Verbrennung und eine minimale Umweltbelastung zu gewährleisten, ist es bekannt, das Blowby-Gas einer Ölabscheideeinrichtung zuzuführen und das abgeschiedene Öl zurück in den Ölkreislauf zu führen. Dabei besteht das Bestreben, entsprechende Ölabscheidesysteme möglichst einfach aber dennoch zuverlässig und effizient auszugestalten. Ein weiterer Aspekt zur Verbesserung von Ölabscheideeinrichtungen betrifft einen minimalen Strömungswiderstand, den der Gasstrom beim Durchströmen der Ölabscheideeinrichtung erfährt. Eine hohe Abscheideleistung ist jedoch erforderlich, um den Eintrag von Restöl in den Ladelufttrakt zu minimieren, insbesondere um ein Verölen von Luftmassenmessern und Turboladern zu verhindern.

Die DE 10 2009 012 400 A1 zeigt eine Ölabscheideeinrichtung, die zur Kurbelgehäuseentlüftung einer Brennkraftmaschine geeignet ist. Als Gehäuse weist die Ölabscheideeinrichtung einen Hohlkörper auf, der beispielsweise durch einen Abschnitt einer Nockenwelle gebildet sein kann, oder der Hohlkörper ist rohrförmig ausgestaltet und in einer Zylinderkopfhaube einer Brennkraftmaschine integriert ist. Im Hohlkörper ist ein Drallerzeuger angeordnet, und der Hohlkörper weist eine endseitige Zuführöffnung zur Einleitung des Gasstromes und eine Abführöffnung zur Ausleitung des Gasstromes auf. Der in den Hohlkörper eingeleitete Gasstrom kann Öl in Form von Ölnebel oder Sprühtröpfchen mitführen, die durch die Ölabscheideeinrichtung aus dem Gasstrom entfernt werden sollen. Hierzu weist der Hohlraum weiterhin eine Abführöffnung zur Ausleitung von abgeschiedenem Öl auf, die getrennt ausgeführt ist von der Ausleitung des vom Öl befreiten Gasstromes.

Prinzipiell nutzen Ölabscheideeinrichtungen einen Dralleffekt aus, der insbesondere dann vorteilhaft einsetzbar ist, wenn die Ölabscheideeinrichtung in einer rotierenden Nockenwelle eingebracht ist, die den Hohlkörper der Ölabscheideeinrichtung bildet. In der DE 10 2009 012 400 A1 ist hierfür ein Drallerzeuger mit mehreren spiralförmig ausgebildeten Strömungskanälen im Hohlkörper eingebracht, durch die ein Drall in den mit Öl beladenen Gasstrom eingebracht wird. Durch die damit einhergehende Änderung der Strömungsrichtung des Gasstromes werden im Gasstrom mitgeführte Öltröpfchen an die Innenwand des Hohlkörpers abgeschieden, und durch die Durchströmung des Hohlkörpers in Längsrichtung gelangen die Öltröpfchen in den Außenbereich des Ölabscheideringes, durch den der Gasstrom im mittigen Bereich des Hohlkörpers vom Ölfluss in den Wandbereich des Hohlkörpers getrennt wird. Schließlich kann nach Anordnung des Ölabscheideringes das Öl durch die Ausleitöffnung für das Öl getrennt werden von der Ausströmöffnung des gereinigten Gasstromes, der anschließend dem Aussaugtrakt des Verbrennungsmotors oder beispielsweise auch eines Kolbenverdichters zugeführt wird. Zur Bildung des Ölabscheideringes ist angegeben, dass dieser aus einem porösen Kunststoff oder aus einem Sinterwerkstoff ausgebildet sein kann, wobei auch Kunststoff- oder Metallgeflechte vorteilhaft einsetzbar sind. Derartige Geflechte bilden eine Vielzahl von Hohlräumen und Labyrinthen, wodurch das Abtrennen des Öls aus dem Gasstrom weiter unterstützt wird. Durch den Drall werden die Öltröpfchen in Bezug auf die Längsachse des Hohlkörpers radial nach außen befördert, und der Gasstrom wird durch den zentralen Durchgang im Ölabscheidering hindurchgeführt.

Dokument EP 2 597 277 offenbart einen Ölabscheider, welcher unter anderem einen Umlenkbereich aufweist, der im Zuströmbereich zentral angeordnet ist und der die axiale Einlassströmung zu radialen Düsen umlenkt. Dieser Umlenkbereich weist an einer dem Einlass zugewandten Seite einen Konus auf, der sich zum Einlass hin verjüngt. Zweckmäßig ist dieser Konus koaxial zur Längsmittelachse der zylindrischen Wand des Ölabscheiders angeordnet. Durch die Rotationsbewegung, die durch den Drallerzeuger in den Gasstrom eingeleitet wird, entsteht beim Durchströmen der Ölabscheideeinrichtung ein nicht unerheblicher Strömungswiderstand im Gasstrom, durch den die Abscheideleistung durch geringere Durchströmraten durch die Ölabscheideeinrichtung wieder reduziert wird.

### OFFENBARUNG DER ERFINDUNG

Aufgabe der Erfindung ist die Weiterbildung einer Ölabscheideeinrichtung insbesondere für die Kurbelgehäuseentlüftung einer Brennkraftmaschine, die eine hohe Abscheideleistung von Öl aus einem Gasstrom ermöglicht und die insbesondere derart weitergebildet ist, dass ein möglichst geringer Strömungswiderstand des Gasstromes durch die Ölabscheideeinrichtung entsteht.

Diese Aufgabe wird ausgehend von einer Ölabscheideeinrichtung gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass im Hohlkörper ein im Wesentlichen rotationssymmetrischer Strömungsleitkörper mit einer in der Längsachse liegenden Strömungsnase und mit einer stromabwärts, also in Strömungsrichtung, radial anwachsenden Strömungskontur angeordnet ist, sodass der Strömungsleitkörper vom Gasstrom umströmbar ist und sodass die Gasströmung zwischen der Strömungskontur und der Innenseite des Hohlkörpers beschleunigt auf den Ölabscheidering auftreffen kann.

Mit der erfindungsgemäßen Anordnung eines Strömungsleitkörpers im Hohlkörper wird der Vorteil erreicht, dass eine direkte Anströmung des Ölabscheideringes möglich wird, ohne dass durch den Strömungsleitkörper ein größerer Strömungswiderstand erzeugt wird. Der verringerte Strömungswiderstand entsteht insbesondere dadurch, dass nicht mehrere Schneckengänge eines Drallerzeugers vorgesehen werden müssen, die mit dem Gasstrom zunächst durchströmt werden müssen, sodass der mit Öl beladene Gasstrom erst anschließend auf den Ölabscheidering auftreffen kann. Der Gedanke der Erfindung basiert dabei auf der Schaffung eines Ringspaltes mit einer umlaufenden Ringspalthöhe, die sich beispielhaft zwischen der Außenseite des Strömungsleitkörpers und der Innenseite des Hohlkörpers ausbildet, sodass hinter dem gebildeten Ringspalt mit einem gewissen Abstand der Ölabscheidering stromabwärts, also in Strömungsrichtung liegend, angeordnet werden kann. Insbesondere wird ein größerer Wandkontakt des Gasstroms mit hohen Strömungsgeschwindigkeiten vermindert, durch den ein erhöhter Strömungswiderstand entstehen kann. Die Angabe der stromabwärts ausgebildeten Anordnung oder Ausrichtung gibt im Sinne der vorliegenden Erfindung nur eine Richtungsangabe wieder, die eine Richtung beschreibt, die in oder mit einer möglichen Gasströmungsrichtung ausgerichtet ist.

Die Strömungskontur des Strömungsleitkörpers kann beispielsweise gegen den Gasstrom ballig ausgebildet sein. Die ballige Ausführung kann beispielsweise beschrieben werden durch einen Kugelabschnitt oder durch einen rotationssymmetrischen Ellipsenabschnitt, der einen Vorderabschnitt zur Bildung der Strömungsnase aufweist, und stromabwärts der Strömungsnase wächst der Durchmesser der Strömungskontur entsprechend der Kugeloberfläche oder der Ellipsenoberfläche an.

Durch die Ausgestaltung des Strömungsleitkörpers, der sich, wie der Hohlkörper selbst, etwa symmetrisch um die Längsachse des Hohlkörpers erstreckt, wird erreicht, dass zwischen dem radial äußeren Bereich des Strömungsleitkörpers und der Innenseite des Hohlkörpers ein umlaufender Strömungsquerschnittsbereich mit einer radialen Strömungsquerschnittsbreite gebildet wird. Mit Vorteil kann dabei der Ölabscheidering eine radiale Breite aufweisen, die wenigstens der radialen Strömungsquerschnittsbreite im Strömungsquerschnittsbereich entspricht. Dabei muss der Strömungsquerschnittsbereich nicht vollumfänglich ausgebildet sein, und beispielsweise können Halterippen zwischen dem Strömungsleitkörper und der Innenseite des Hohlkörpers vorgesehen sein, um den Strömungsleitkörper mittig im Hohlkörper zu positionieren, durch die der umlaufende Strömungsquerschnittsbereich unterbrochen werden kann. Auf ebenfalls vorteilhafte Weise kann der Ringspalt alternativ auch durch eine Vielzahl von umfangsseitig des Strömungsleitkörpers ausgebildeten Axialspalten in Form von runden oder länglichen Öffnungen ausgebildet sein.

Der Ölabscheidering kann beispielsweise wenigstens teilweise aus einem Vliesstoff gebildet sein. Durch die Verwendung eines Vliesstoffes kann die Absorptionswirkung zur Aufnahme des Öls aus dem Gasstrom weiter verbessert werden, wobei alternativ auch poröse Kunststoffe oder Sinterwerkstoff zur Bildung des Ölabscheideringes verwendet werden können. Grundsätzlich verhindern verschiedene Arten von Kunststoff- oder Metallgeflechten oder sonstigen Gewirken ein Versotten des durch die diese Materialien gebildeten Körpers, sodass sich diese nicht durch Öl und insbesondere durch Fremdstoffe im Öl zusetzen.

Mit weiterem Vorteil kann der Ölabscheidering einen Trägerring aufweisen, in dem der Vliesstoff wenigstens teilweise aufgenommen ist. Dabei kann der Ölabscheidering und insbesondere der Vliesstoff im beschleunigten Gasstrom so eingebracht sein, dass der Ölabscheidering beziehungsweise der Vliesstoff als Impaktor wirkt, auf den der Gasstrom unter Abscheidung des Öls am Ölabscheidering beziehungsweise am Vliesstoff auftreffen kann. Der Ölabscheidering kann mit seinem Außenumfang angrenzend an der Innenseite des Hohlkörpers angeordnet sein, sodass wenigstens ein Teil des Gasstroms durch den Ölabscheidering radial nach innen ablenkbar ist. Vorteilhaft ist jedoch ein verbleibender, radial ausgebildeter umlaufender Spalt zwischen der Innenseite des Hohlkörpers und dem Ölabscheidering, sodass bereits an der Stirnseite des Ölabscheideringes gebildete und niedergeschlagene Öltröpfchen an der Innenwand des Hohlkörpers zwischen Hohlkörper und Ölabscheidering stromabwärts wandern können. Durch die Impaktorwirkung des Ölabscheideringes und insbesondere des Vliesstoffes entsteht eine starke Strömungsrichtungsänderung des Gasstroms, der die Öltröpfchen im Gasstrom nicht folgen können. Folglich bleiben die Öltröpfchen am Ölabscheidering und insbesondere am Vliesstoff hängen und können an der Innenseite des Hohlkörpers stromabwärts wandern und anschließend durch eine entsprechende Öffnung im Hohlkörper abgeführt werden. Der vom Öl gereinigte Gasstrom kann den mittigen Durchgang durch den Ölabscheidering durchströmen und dem Ladelufttrakt der Brennkraftmaschine zugeführt werden.

Gemäß einem weiteren Aspekt der Erfindung kann der Vliesstoff eine Gasdurchlässigkeit aufweisen, die derart bestimmt ist, dass der Gasstrom teilweise den Vliesstoff durchströmen kann. Dadurch kann eine gute Filterwirkung des Vliesstoffes ausgenutzt werden, indem ein Teil des Gasstromes direkt durch den Vliesstoff geleitet wird, wobei ein weiterer Teil des Gasstromes durch die Impaktorwirkung an der Oberfläche des Ölabscheideringes Öl an diesen abgibt und umgelenkt wird, um schließlich den Ölabscheidering durch den mittigen Durchgang zu verlassen. Dadurch entsteht insbesondere der positive Nebeneffekt einer Reduzierung des Druckverlustes über das Gesamtsystem der Ölabscheideeinrichtung, da stromabwärts nach dem Strömungsquerschnittsbereich ein größerer Gesamtquerschnitt für den Gasstrom zur Verfügung steht. Die Vergrößerung des Gesamtquerschnittes ergibt sich einerseits durch den Bereich zwischen dem Strömungsleitkörper und dem Ölabscheidering, der durch den Gasstrom durchströmt werden kann, um schließlich durch den Durchgang im Ölabscheidering abzuströmen, und zuzüglich entsteht ein Strömungsquerschnitt durch den Vliesstoff hindurch. Im Ergebnis wird ein Ölabscheidering insbesondere umfassend einen Vliesstoff einerseits als Impaktor genutzt, um eine Ölabscheidung durch eine plötzliche Umlenkung des Gasstromweges zu erreichen, andererseits wird der Ölabscheidering als Filter genutzt, wenn ein Teil des Gasstromes den Ölabscheidering und insbesondere den Vliesstoff durchströmt. Insbesondere bei größeren Durchflussmengen an mit Öl beladenem Gas durch die Ölabscheideeinrichtung kann die zusätzliche Filterwirkung im Vliesstoff des Ölabscheideringes vorteilhaft einsetzen. Wird die Ölabscheideeinrichtung mit einem geringeren Gasstrom durchströmt, so kann eine wirksame Ölabscheidung bereits durch die Impaktorwirkung durch den Ölabscheidering erfolgen.

Gemäß einer weiteren vorteilhaften Ausführungsform kann ein weiterer Ölabscheidekörper vorgesehen sein, der im Hohlkörper dem Ölabscheidering stromabwärts nachgelagert angeordnet ist. Der weitere Ölabscheidekörper kann beispielsweise rohrförmig ausgebildet und in den Hohlkörper eingeschoben sein. Dabei kann der weitere Ölabscheidekörper aus einem Vliesstoff bestehen oder wenigstens teilweise einen Vliesstoff umfassen. Auch der weitere Ölabscheidekörper kann als Impaktor wirken oder der weitere Ölabscheidekörper wird wenigstens teilweise vom Gasstrom durchströmt, sodass, wie im Zusammenhang mit dem Ölabscheidering bereits beschrieben, auch der weitere Ölabscheidekörper Öl aufgrund der Impaktorwirkung oder zusätzlich aufgrund einer Filterwirkung aus dem Gasstrom abscheiden kann.

Zur Verbesserung der Durchströmung des weiteren Ölabscheidekörpers kann dem Strömungsleitkörper stromabwärts ein Umlenkkörper nachgelagert sein, durch den der Gasstrom gegen die Innenseite des mantelförmigen weiteren Ölabscheidekörpers umgelenkt wird. Hierzu kann zwischen dem Ölabscheidering und dem Umlenkkörper ein Zwischenelement eingebracht sein, wobei das Zwischenelement Radialspalte aufweisen kann, durch die der Gasstrom insbesondere beschleunigt gegen die Innenseite des weiteren Ölabscheidekörpers auftreffen kann. Der vorgelagerte Ölabscheidering kann ein Vliesstoff umfassen, der vorzugsweise zur Abscheidung größerer Öltröpfchen dienen kann und der weitere Ölabscheidekörper kann einen Vliesstoff umfassen, durch den kleinere Öltröpfchen abgeschieden werden können. Neben den Öltröpfchen können auch Fremdkörper, insbesondere kleine Partikel, durch die Abscheidekörper aus dem Gasstrom abgeschieden werden, und beispielsweise können durch den weiteren Abscheidekörper Partikel abgeschieden werden, die kleiner als 1 Mikrometer und insbesondere kleiner als 0,6 Mikrometer ausgebildet sind.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: ein erstes Ausführungsbeispiel einer Ölabscheideeinrichtung mit einem Strömungsleitkörper und mit einem Ölabscheidering, wobei die Ölabscheideeinrichtung mit einem schwachen mit Öl beladenen Gasvolumenstrom durchströmt wird,
- Fig. 2: das erste Ausführungsbeispiel der Ölabscheideeinrichtung gemäß Fig. 1, wobei die Ölabscheideeinrichtung mit einem starken mit Öl beladenen Gasvolumenstrom durchströmt wird,
- Fig. 3: ein weiteres Ausführungsbeispiel einer Ölabscheideeinrichtung mit einem Strömungsleitkörper und mit einem Ölabscheidering,
- Fig. 4: ein zweites Ausführungsbeispiel einer Ölabscheideeinrichtung mit einem Strömungsleitkörper und mit einem Ölabscheidering als erste Abscheidestufe und mit einem Umlenkkörper und mit einem weiteren Ölabscheidekörper als zweite Ölabscheidestufe und
- Fig. 5: eine perspektivische Ansicht der Ölabscheideeinrichtung gemäß dem Ausführungsbeispiel in Figur 4.

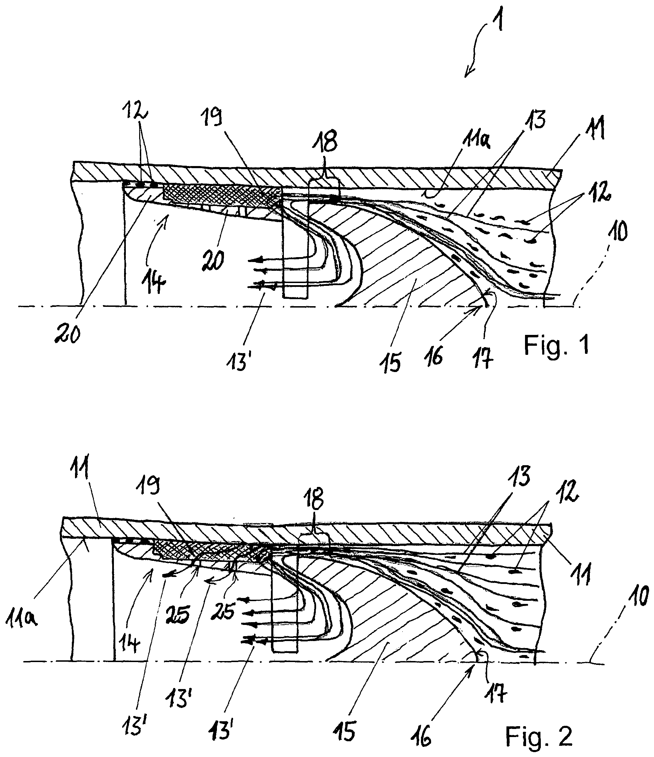

In den Figuren 1 und 2 ist jeweils eine Ölabscheideeinrichtung 1 gemäß einem ersten Ausführungsbeispiel gezeigt, die zur Entölung eines Gasstromes 13 dienen kann, und die zur Entlüftung eines Kurbelgehäuses einer Brennkraftmaschine Verwendung finden kann. Der in die Ölabscheideeinrichtung 1 einströmende Gasstrom 13 ist mit Öl 12 beladen, wobei das Öl 12 beispielhaft in Tröpfchenform gezeigt ist, und das Öl 12 kann auch als Ölnebel oder als Sprühöl vorliegen. Weiterhin können im Gasstrom 13 Fremdkörper in Form von kleinen Partikeln mitgeführt werden, die ebenfalls durch die Ölabscheideeinrichtung 1 aus dem Gasstrom 13 abgeschieden werden können. In Figur 1 ist dabei die Ölabscheideeinrichtung 1 mit einem schwächer ausgebildeten Gasstrom 13 gezeigt, und Figur 2 zeigt die Ölabscheideeinrichtung 1, die durch einen stärkeren Gasstrom 13 durchströmt wird.

Die Ölabscheideeinrichtung 1 umfasst als Gehäuse einen Hohlkörper 11, der rohrförmig entlang einer Längsachse 10 sich axial erstreckend ausgebildet ist, und der Hohlkörper 11 kann einen Teil einer Nockenwelle der Brennkraftmaschine bilden, die als Hohl-Nockenwelle in gebauter Form ausgebildet sein kann. Dabei wird in nicht näher gezeigter Weise der mit Öl 12 beladene Gasstrom 13 in den Hohlkörper 11 eingeleitet und auf einer gegenüberliegenden Seite aus dem Hohlkörper 11 wieder ausgeleitet, wobei der ausgeleitete Gasstrom 13' im Wesentlichen vom Öl 12 befreit ist.

Die Ölabscheideeinrichtung 1 weist einen im Hohlkörper 11 eingebrachten Strömungsleitkörper 15 auf, der in der Bildebene von der rechten Seite vom mit Öl 12 beladenen Gasstrom 13 angeströmt wird. Der Strömungsleitkörper 15 ist beispielhaft rotationssymmetrisch um die Längsachse 10 ausgebildet, wobei die Ölabscheideeinrichtung 1 aufgrund ihrer Rotationssymmetrie nur in einer Hälfte oberhalb der Längsachse 10 bildlich dargestellt ist. Der Strömungsleitkörper 15 weist eine Strömungsnase 16 auf, und stromabwärts der Strömungsnase 16 wächst die Strömungskontur 17 des Strömungsleitkörpers 15 derart an, dass ein balliger Strömungsleitkörper gebildet wird, wobei die ballige Vorderseite entgegen der Strömungsrichtung des Gasstromes 13 weist. Der Strömungsleitkörper 15 weist einen äußeren Durchmesser auf, der etwas kleiner ist als der Durchmesser der Innenseite 11a des Hohlkörpers 11. Dadurch entsteht zwischen der äußeren Strömungskontur 17 des Strömungsleitkörpers 15 und der Innenseite 11a des Hohlkörpers 11 ein Strömungsquerschnittsbereich 18, und durch die Strömungsverengung in Richtung des um den Strömungsleitkörper 15 umlaufenden Strömungsquerschnittsbereiches 18 entsteht eine Beschleunigung des Gasstromes 13. Die Beschleunigung des Gasstromes 13 erfolgt dabei mit einem nur geringen Strömungswiderstand, und der beschleunigte Gasstrom 13 kann den Strömungsleitkörper 15 vollumfänglich umströmen, um anschließend gegen einen Ölabscheidering 14 zu gelangen.

Die Anordnung des Strömungsleitkörpers 15 im Hohlkörper 11 ist lediglich schematisch gezeigt, und zwischen der Innenseite 11a des Hohlkörpers 11 und dem Strömungsleitkörper 15 können an mehreren Umfangspositionen Halterippen oder dergleichen angeordnet sein, um den Strömungsleitkörper 15 mittig im Hohlkörper 11 aufzunehmen, ohne dass dadurch der Effekt der Strömungsbeschleunigung im Strömungsquerschnittsbereich 18 negativ beeinträchtigt wird.

Der Ölabscheidering 14 ist in einem Abstand hinter dem Strömungsleitkörper 15 im Hohlkörper 11 eingebracht, sodass der beschleunigte Gasstrom 13 zunächst auf den Ölabscheidering 14 auftreffen kann und wobei der Gasstrom 13 wenigstens teilweise durch den Ölabscheidering 14 radial nach innen zur Längsachse 10 hin umgelenkt wird.

Der Ölabscheidering 14 weist einen Vliesstoff 19 und einen Trägerring 20 auf, wobei der Vliesstoff 19 durch den Trägerring 20 an der Innenseite 11a des Hohlkörpers 11 gehalten ist, sodass sich der Vliesstoff 19 im Auftreffbereich des beschleunigten Gasstromes 13 befindet.

Figur 1 zeigt die Ölabscheideeinrichtung 1, die mit einem schwächer ausgebildeten Gasstrom 13 durchströmt wird, und der Gasstrom 13 wird unter Bildung einer Impaktorwirkung im Wesentlichen vollständig vom Vliesstoff 19 des Ölabscheideringes 14 nach innen in Richtung zur Längsachse 10 umgelenkt. Durch die Trägheit der mit dem Gasstrom 13 mitgeführten Tröpfchen aus Öl 12 verbleibt dieses im Vliesstoff 19, durchläuft diesen und wandert an der Innenseite 11a des Hohlkörpers 11 stromabwärts aus dem Vliesstoff 19 aus. Hierzu befindet sich zwischen der Außenseite des Ölabscheideringes 14 und der Innenseite 11a des Hohlkörpers 11 ein Spalt, der es ermöglicht, dass das Öl 12 an der Innenseite 11a des Hohlkörpers 11 stromabwärts wandern kann. Das Öl 12, das mit dem Gasstrom 13 in die Ölabscheideeinrichtung 1 eingeführt wird, kann in Nebelform oder in Form kleinerer Tröpfchen vorliegen, wobei das abgeschiedene Öl 12, das an den Oberflächen der Bauteile entlang läuft, in größeren Tropfen auftreten kann, das anschließend einer nicht gezeigten Abscheidung zugeführt wird, ohne sich wieder mit dem Gasstrom 13 zu vermischen.

Hierzu kann auf nicht näher gezeigte Weise anschließend das Öl 12 aus dem Hohlkörper 11 durch eine Ölabführöffnung abgeführt und der Abscheidung bzw. dem Ölkreislauf der Brennkraftmaschine wieder zugeführt werden. Der den Ölabscheidering 14 mittig durchströmende Gasstrom 13' ist dabei im Wesentlichen vom Öl 12 befreit und kann dem Ladelufttrakt der Brennkraftmaschine zugeführt werden.

Figur 2 zeigt die Ölabscheideeinrichtung 1, die durch einen stärkeren Gasstrom 13 durchströmt wird und wie in Zusammenhang mit Figur 1 bereits beschrieben, befindet sich im Hohlkörper 11 ein Strömungsleitkörper 15 mit einer Strömungsnase 16 und mit einer Strömungskontur 17, und der mit Öl 12 beladene Gasstrom 13 beschleunigt in einen Strömungsquerschnittsbereich 18 hinein, der sich zwischen der Außenseite des Strömungsleitkörpers 15 und der Innenseite 11a des Hohlkörpers 11 radial umlaufend erstreckt. Nach Durchlauf des Gasstromes 13 durch den Strömungsquerschnittsbereich 18, dessen Querschnitt bestimmt ist durch die Ringspalthöhe, gelangt dieser unter Ausnutzung einer Impaktorwirkung gegen den Vliesstoff 19 des Ölabscheiderings 14, und ein Teil des Gasstromes 13 wird in Richtung zur Längsachse 10 nach innen umgelenkt, wobei bereits erste Öltröpfchen aus Öl 12 am Vliesstoff 19 abscheiden. Durch den stärkeren Gasstrom 13 gelangt ein weiterer Teil des Gasstromes 13 in den Vliesstoff 19 hinein, und der in den Vliesstoff 19 eingetragene Gasstrom 13 gelangt durch Austrittsöffnungen 25 aus dem Trägerring 20 heraus. Dabei entsteht ein gereinigter Gasstrom 13, der unter Filterwirkung den Vliesstoff 19 des Ölabscheideringes 14 durchströmt hat. Der gereinigte Gasstrom 13 wird daraufhin mit dem gereinigten Gasstrom 13', der am Ölabscheidering 14 umgelenkt wurde, zusammengeführt, um schließlich dem Ladelufttrakt der Brennkraftmaschine zugeführt zu werden.

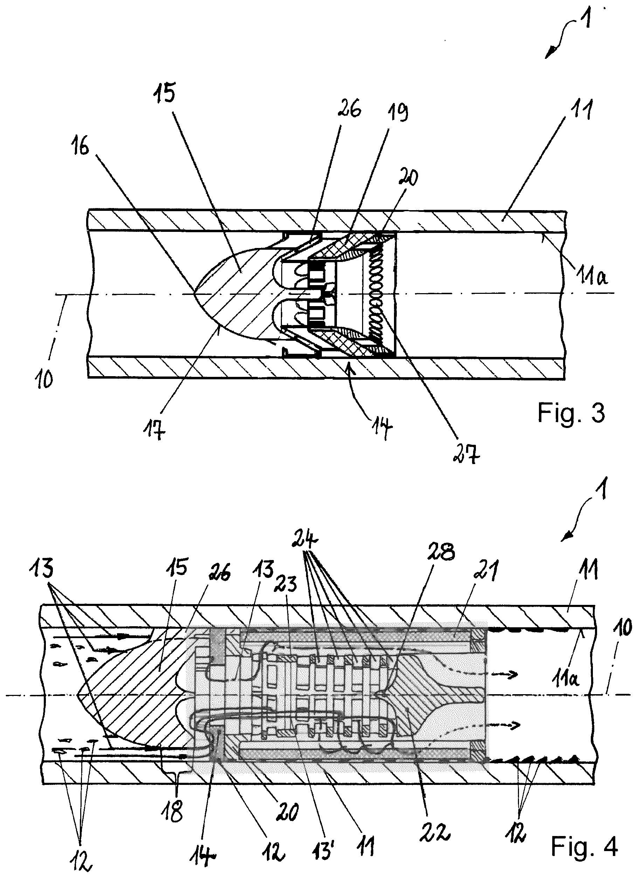

Figur 3 zeigt eine weitere Variante einer Ölabscheideeinrichtung 1 mit einem Strömungsleitkörper 15, der beginnend von einer in der Längsachse 10 liegenden Strömungsnase 16 eine etwa parabolisch anwachsende Strömungskontur 17 aufweist. Der Strömungsleitkörper 15 ist koaxial im Hohlkörper 11 eingebracht und erstreckt sich um die Längsachse 10 im Wesentlichen rotationssymmetrisch. Der Strömungsleitkörper 15 ist über Halterippen 26 mittig gegen die Innenseite 11a des Hohlkörpers 11 abgestützt, sodass die Halterippen 26 durch den nicht dargestellten Gasstrom umströmt werden können, ohne dass die Halterippen 26 einen wesentlichen Strömungswiderstand bilden.

Hinter dem Strömungsleitkörper 15 ist stromabwärts ein Ölabscheidering 14 mit einem Vliesstoff 19 und einem Trägerring 20 angeordnet, wobei im Trägerring 20 über den Umfang verteilt mehrere Durchgangsöffnungen 27 verteilt angeordnet sind, durch die am Vliesstoff 19 abgeschiedenes Öl hindurchtreten kann, um abschließend eine Abscheideöffnung (nicht näher gezeigt) zugeführt zu werden. Der Vliesstoff 19 wird vom Trägerring 20 gehalten, wobei der Trägerring 20 gemäß dem gezeigten Ausführungsbeispiel mit dem Strömungsleitkörper 15 einteilig ausgeführt ist.

Figur 4 zeigt schließlich ein weiteres Ausführungsbeispiel einer Ölabscheideeinrichtung 1, die in einem Hohlkörper 11 eingebracht ist. Die Ölabscheideeinrichtung 1 weist einen Strömungsleitkörper 15 auf, der von einem Gasstrom 13 angeströmt wird, welcher mit Tröpfchen aus Öl 12 beladen ist. Der Strömungsleitkörper 15 erstreckt sich rotationssymmetrisch um die Längsachse 10 des Hohlkörpers 11 und ist gegen die Innenseite 11a des Hohlkörpers 11 über entsprechende Halterippen 26 gehalten, von denen eine Halterippe 26 oberseitig im Schnitt beispielhaft dargestellt ist.

Zwischen der Außenseite des Strömungsleitkörpers 15 und der Innenseite 11a des Hohlkörpers 11 wird ein Strömungsquerschnittsbereich 18 gebildet, der ungeachtet der Halterippen 26 im Wesentlichen vollumfänglich um den Strömungsleitkörper 15 herum ausgebildet ist. Der Gasstrom 13 wird wie bereits in Zusammenhang mit den Figuren 1 und 2 durch den Strömungsleitkörper 15 in den Strömungsquerschnittsbereich 18 hinein beschleunigt, und der beschleunigte Gasstrom 13 trifft anschließend auf einen Ölabscheidering 14. Der Ölabscheidering 14 weist einen hinterseitigen Trägerring 20 auf, gegen den der Ölabscheidering 14 abgestützt ist, wobei der Ölabscheidering 14 aus einem Vliesstoff gebildet ist und eine erste Abscheidestufe bildet.

Durch das Auftreffen des Gasstromes 13 auf den Ölabscheidering 14 aus Vliesstoff entsteht eine Impaktorwirkung, sodass Tröpfchen des Öls 12 bereits durch Impaktorwirkung am Ölabscheidering 14 abgeschieden werden. Das abgeschiedene Öl 12 kann durch entsprechende Aussparungen zwischen dem Trägerring 20 und der Innenseite 11a des Hohlkörpers 11 an der Innenseite 11a stromabwärts entlang wandern, um anschließend in eine Abscheideöffnung zum Herausführen des Öls 12 aus dem Hohlkörper 11 zu gelangen.

Der durch die Impaktorwirkung umgelenkte Gasstrom 13' durchläuft den Ölabscheidering 14 durch einen inneren Durchgang, wobei der Gasstrom 13 bereits vorgereinigt ist. Der vorgereinigte Gasstrom 13 gelangt anschließend über ein Zwischenelement 23 in Wirkeinfluss mit einem Umlenkkörper 22, und der Gasstrom 13 wird durch den Umlenkkörper 22 gegen einen weiteren Ölabscheidekörper 21 abgelenkt. Das Zwischenelement 23 weist Radialspalte 24 auf, durch die der Gasstrom 13 gegen die Innenseite des rohrförmig oder hülsenförmig ausgebildeten weiteren Ölabscheidekörpers 21 gelangt. Die Ablenkung des Gasstromes 13 radial nach außen erfolgt durch den Umlenkkörper 22, der hierfür eine Umlenkspitze 28 aufweist, und der Umlenkspitze 28 folgt eine etwa hyperbolische Körperform des Umlenkkörpers 22, der sich rotationssymmetrisch um die Längsachse 10 herum erstreckt und der mit dem Zwischenelement 23 einteilig ausgebildet ist.

Der gegen die Innenseite des Ölabscheidekörpers 21 gelangende Gasstrom 13 erfährt eine weitere Impaktorwirkung, wodurch eine zusätzliche Abscheidewirkung von tröpfchenförmigem Öl 12 erreicht wird, sodass schließlich der auf der rechten Seite die Ölabscheideeinrichtung 1 abströmende Gasstrom 13 in besonderer Weise gereinigt ist.

Der weitere Ölabscheidekörper 21 kann ebenfalls einen Vliesstoff umfassen, und der vorgereinigte Gasstrom 13 kann lediglich gegen die Innenseite des Ölabscheidekörpers 21 anströmen oder diesen sogar wenigstens mit einem Teilgasstrom auch durchströmen. Das abgeschiedene Öl 12 kann anschließend über eine nicht gezeigte Ölabführöffnung abgeführt werden.

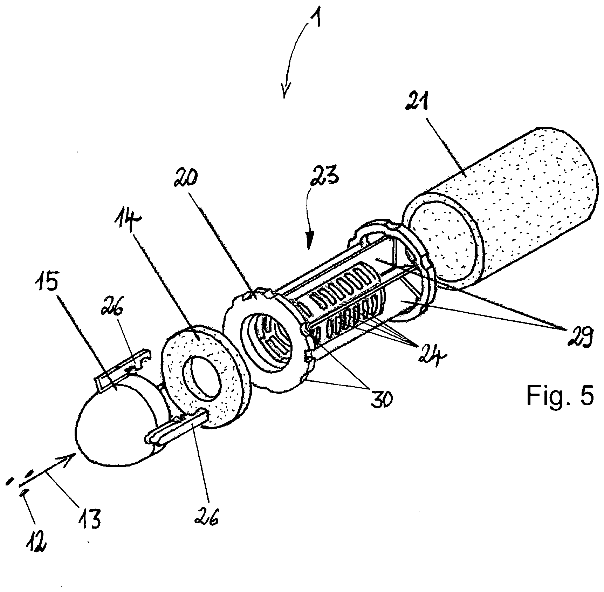

Figur 5 zeigt eine Explosionsansicht von Teilen der Ölabscheideeinrichtung 1 gemäß dem Ausführungsbeispiel in Figur 4, wobei der Hohlkörper 11 zur besseren Anschaulichkeit nicht dargestellt ist. Die Ölabscheideeinrichtung 1 wird aus gezeigter Pfeilrichtung mit dem Gasstrom 13 und mit diesem mitgeführtes Öl 12 angeströmt, sodass zunächst der Strömungsleitkörper 15 in Kontakt mit dem Gasstrom 13 und den beispielhaft gezeigten Tröpfchen aus Öl 12 gelangt. An den Strömungsleitkörper 15 schließt sich der Ölabscheidering 14 an, der durch einen Trägerring 20 rückseitig gehalten wird. Dabei kann der Strömungsleitkörper 15 unter gleichzeitiger Fixierung des Ölabscheideringes 14 am Trägerring 20 verklipst werden, wozu die Halterippen 26 als Schnapphaken ausgebildet sind.

Der Trägerring 20 ist beispielhaft einteilig mit dem Zwischenelement 23 ausgeführt, und das Zwischenelement 23 weist sich in Strömungsrichtung erstreckende Haltewände 29 auf, durch die der weitere Ölabscheidekörper 21 gegen die Innenwand des nicht näher gezeigten Hohlkörpers gehalten werden kann. Somit wird ein Abstand zwischen den Radialspalten 24 im Zwischenelement 23 und dem Ölabscheidekörper 21 gewahrt, sodass die Innenseite des Ölabscheidekörpers 21 durch den Gasstrom 13 angeströmt werden kann.

Außenseitig am Trägerring 20 sind Aussparungen 30 gezeigt, durch die Öl 12, das bereits durch den ersten Ölabscheidering 14 aus dem Gasstrom 13 abgeschieden wurde, an der Außenseite des Ölabscheidekörpers 21 weitergeleitet werden kann.

Der Vliesstoff 19 muss nicht zwingend die Innenwand des Hohlkörpers 11 berühren, sondern ein Spalt zwischen Außenumfangsfläche des Vliesstoffes 19 und der Innenumfangsfläche des Hohlkörpers 11 kann gegeben sein.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Ölabscheideeinrichtung

- 10: Längsachse
- 11: Hohlkörper
- 11a: Innenseite des Hohlkörpers
- 12: Öl
- 13: Gasstrom
- 13': gereinigter Gasstrom
- 14: Ölabscheidering
- 15: Strömungsleitkörper
- 16: Strömungsnase
- 17: Strömungskontur
- 18: Strömungsquerschnittsbereich
- 19: Vliesstoff
- 20: Trägerring
- 21: Ölabscheidekörper
- 22: Umlenkkörper
- 23: Zwischenelement
- 24: Radialspalt
- 25: Austrittsöffnung
- 26: Halterippe
- 27: Durchgangsöffnung
- 28: Umlenkspitze
- 29: Haltewand
- 30: Aussparung

## Patentansprüche

1. Ölabscheideeinrichtung (1), insbesondere für eine Kurbelgehäuseentlüftung einer Brennkraftmaschine, mit einem sich in einer Längsachse (10) axial erstreckenden Hohlkörper (11), der von einem mit Öl (12) beladenen Gasstrom (13) durchströmbar ist, wobei im Hohlkörper (11) ein Ölabscheidering (14) eingebracht ist, der vom Gasstrom (12) anströmbar ist, wobei
im Hohlkörper (11) ein im Wesentlichen rotationssymmetrischer Strömungsleitkörper (15) mit einer in der Längsachse (10) liegenden Strömungsnase (16) und mit einer stromabwärts radial anwachsenden Strömungskontur (17) angeordnet ist, sodass der Strömungsleitkörper (15) vom Gasstrom (13) umströmbar ist, **dadurch gekennzeichnet, dass** zwischen dem radial äußeren Bereich des Strömungsleitkörpers (15) und der Innenseite (11a) des Hohlkörpers (11) ein umlaufender Strömungsquerschnittsbereich (18) mit einer radialen Strömungsquerschnittsbreite gebildet ist, wobei der Ölabscheidering (14) eine radiale Breite aufweist, die wenigstens der radialen Strömungsquerschnittsbreite im Strömungsquerschnittsbereich (18) entspricht und dass die Gasströmung (13) zwischen der Strömungskontur (17) und der Innenseite (11a) des Hohlkörpers (11) beschleunigt auf den Ölabscheidering (14) auftreffen kann.

2. Ölabscheideeinrichtung (1) nach Anspruch 1, **dadurch gekennzeichnet, dass** die Strömungskontur (17) des Strömungsleitkörpers (15) entgegen einer Durchströmungsrichtung des Gasstromes (13) ballig ausgebildet ist.

3. Ölabscheideeinrichtung (1) nach einem der Ansprüche 1 oder 2, **dadurch gekennzeichnet, dass** der Ölabscheidering (14) wenigstens teilweise aus einem Vliesstoff (19) gebildet ist.

4. Ölabscheideeinrichtung (1) nach einem der vorgenannten Ansprüche, **dadurch gekennzeichnet, dass** der Ölabscheidering (14) einen Trägerring (20) aufweist, in dem der Vliesstoff (19) wenigstens teilweise aufgenommen ist.

5. Ölabscheideeinrichtung (1) nach einem der vorgenannten Ansprüche, **dadurch gekennzeichnet, dass** der Ölabscheidering (14) und insbesondere der Vliesstoff (19) im beschleunigten Gasstrom (13) derart eingebracht ist, dass der Ölabscheidering (14) bzw. der Vliesstoff (19) als Impaktor wirkt, auf den der Gasstrom (13) unter Abscheidung des Öls (12) an den Ölabscheidering (14) bzw. an den Vliesstoff (19) auftreffen kann.

6. Ölabscheideeinrichtung (1) nach einem der vorgenannten Ansprüche, **dadurch gekennzeichnet, dass** der Ölabscheidering (14) mit seinem Außenumfang angrenzend an die Innenseite (11a) des Hohlkörpers (11) angeordnet ist und sodass wenigstens ein Teil des Gasstromes (12) durch den Ölabscheidering (14) radial nach innen ablenkbar ist.

7. Ölabscheideeinrichtung (1) nach einem der vorgenannten Ansprüche, **dadurch gekennzeichnet, dass** der Vliesstoff (19) eine Gasdurchlässigkeit aufweist, die derart bestimmt ist, dass der Gasstrom (13) teilweise den Vliesstoff (19) durchströmen kann.

8. Ölabscheideeinrichtung (1) nach einem der vorgenannten Ansprüche, **dadurch gekennzeichnet, dass** ein weiterer Ölabscheidekörper (21) vorgesehen ist, der im Hohlkörper (11) dem Ölabscheidering (14) stromabwärts nachgelagert angeordnet ist.

9. Ölabscheideeinrichtung (1) nach Anspruch 8, **dadurch gekennzeichnet, dass** der weitere Ölabscheidekörper (21) rohrförmig ausgebildet und in den Hohlkörper (11) eingeschoben ist.

10. Ölabscheideeinrichtung (1) nach Anspruch 8 oder 9, **dadurch gekennzeichnet, dass** dem Strömungsleitkörper (15) stromabwärts ein Umlenkkörper (22) nachgelagert ist, durch den der Gasstrom (13) gegen die Innenseite des rohrförmigen weiteren Ölabscheidekörpers (21) umlenkbar ist.

11. Ölabscheideeinrichtung (1) nach einem der Ansprüche 8 bis 10, **dadurch gekennzeichnet, dass** zwischen dem Ölabscheidering (14) und dem Umlenkkörper (22) ein Zwischenelement (23) eingebracht ist, wobei das Zwischenelement (23) Radialspalte (24) aufweist, durch die der Gasstrom (12) insbesondere beschleunigt gegen die Innenseite des weiteren Ölabscheidekörpers (21) auftreffen kann.

## Claims

1. Oil-separating device (1), particularly for crankcase ventilation of an internal combustion engine, having a hollow member (11) which extends axially in a longitudinal axis (10) and through which a gas flow (13) which is charged with oil (12) can flow, wherein an oil separation ring (14) which can be flowed against by the gas flow (12) is formed in the hollow member (11), wherein
there is arranged in the hollow member (11) a substantially rotationally symmetrical flow guiding member (15) which has a flow projection (16) located in the longitudinal axis (10) and which has a flow contour (17) which radially increases in a downstream direction so that the flow guiding member (15) can be flowed round by the gas flow (13), **characterized in that** there is formed between the radially outer region of the flow guiding member (15) and the inner side (11a) of the hollow member (11) a peripheral flow cross-section region (18) having a radial flow cross-section width, wherein the oil separation ring (14) has a radial width which corresponds at least to the radial flow cross-section width in the flow cross-section region (18), and **in that** the gas flow (13) between the flow contour (17) and the inner side (11a) of the hollow member (11) can strike the oil separation ring (14) in an accelerated manner.

2. Oil-separating device (1) according to Claim 1, **characterized in that** the flow contour (17) of the flow guiding member (15) is constructed to be convex counter to a flow direction of the gas flow (13).

3. Oil-separating device (1) according to either of Claims 1 and 2, **characterized in that** the oil separation ring (14) is formed at least partially from a nonwoven material (19).

4. Oil-separating device (1) according to one of the preceding claims, **characterized in that** the oil separation ring (14) has a carrier ring (20), in which the nonwoven material (19) is at least partially received.

5. Oil-separating device (1) according to one of the preceding claims, **characterized in that** the oil separation ring (14) and in particular the nonwoven material (14) is formed in the accelerated gas flow (13) in such a manner that the oil separation ring (14) or the nonwoven material (19) acts as an impactor, which the gas flow (13) can strike so as to separate the oil (12) at the oil separation ring (14) or the nonwoven material (19).

6. Oil-separating device (1) according to one of the preceding claims, **characterized in that** the oil separation ring (14) is arranged with the outer periphery thereof adjacent to the inner side (11a) of the hollow member (11) and so that at least a portion of the gas flow (12) can be redirected radially inward by the oil separation ring (14).

7. Oil-separating device (1) according to one of the preceding claims, **characterized in that** the nonwoven material (19) has a gas-permeability which is determined in such a manner that the gas flow (13) can partially flow through the nonwoven material (19).

8. Oil-separating device (1) according to one of the preceding claims, **characterized in that** there is provided an additional oil separation member (21) which is arranged in the hollow member (11) so as to be located downstream of the oil separation ring (14).

9. Oil-separating device (1) according to Claim 8, **characterized in that** the additional oil separation member (21) is formed in a tubular manner and is fitted in the hollow member (11).

10. Oil-separating device (1) according to Claim 8 or 9, **characterized in that** there is arranged downstream of the flow guiding member (15) a redirection member (22) by which the gas flow (13) can be redirected against the inner side of the tubular additional oil separation member (21).

11. Oil-separating device (1) according to one of Claims 8 to 10, **characterized in that** an intermediate element (23) is formed between the oil separation ring (14) and the redirection member (22), wherein the intermediate element (23) has radial gaps (24), through which the gas flow (12) can strike the inner side of the additional oil separation member (21), in particular in an accelerated manner.

## Revendications

1. Dispositif (1) de séparation d'huile, en particulier pour la ventilation du carter de vilebrequin d'un moteur à combustion interne, présentant un corps creux (11) qui s'étend axialement le long d'un axe longitudinal (10) et qui peut être traversé par un écoulement (13) de gaz chargé en huile (12), une bague (14) de séparation d'huile qui peut être balayée par l'écoulement de gaz (12) étant ménagée dans le corps creux (11),
un corps (15) de guidage d'écoulement à symétrie essentiellement circulaire étant disposé dans le corps creux (11) et présentant un bec d'écoulement (16) situé le long de l'axe longitudinal (10) et un contour d'écoulement (17) qui grandit radialement dans la direction aval de l'écoulement de telle sorte que le corps (15) de guidage d'écoulement puisse être balayé par l'écoulement de gaz (13),
**caractérisé en ce que**
entre la partie radialement extérieure du corps (15) de guidage d'écoulement et le côté intérieur (11a) du corps creux (11) est formée une partie périphérique (18) dont la section transversale d'écoulement présente une largeur radiale de section transversale d'écoulement,
**en ce que** la bague (14) de séparation d'huile présente une largeur radiale qui correspond au moins à la largeur radiale de section transversale d'écoulement de la partie (18) de section transversale d'écoulement et
**en ce que** l'écoulement de gaz (13) peut aboutir de manière accélérée sur la bague (14) de séparation d'écoulement entre le contour d'écoulement (17) et le côté intérieur (11a) du corps creux (11).

2. Dispositif (1) de séparation d'huile selon la revendication 1, **caractérisé en ce que** le contour d'écoulement (17) du corps (15) de guidage d'écoulement est bombé dans la direction opposée à la direction de traversée par l'écoulement de gaz (13).

3. Dispositif (1) de séparation d'huile selon l'une des revendications 1 ou 2, **caractérisé en ce que** la bague (14) de séparation d'huile est formée au moins en partie d'un feutre (19).

4. Dispositif (1) de séparation d'huile selon l'une des revendications précédentes, **caractérisé en ce que** la bague (14) de séparation d'huile présente une bague de support (20) dans laquelle le feutre (19) est repris au moins en partie.

5. Dispositif (1) de séparation d'huile selon l'une des revendications précédentes, **caractérisé en ce que** la bague (14) de séparation d'huile et en particulier le feutre (19) sont disposés dans l'écoulement de gaz (13) accéléré de telle sorte que la bague (14) de séparation d'huile ou le feutre (19) jouent le rôle d'un impacteur sur lequel l'écoulement de gaz (13) peut aboutir avec séparation de l'huile (12) sur la bague (14) de séparation d'huile ou sur le feutre (19).

6. Dispositif (1) de séparation d'huile selon l'une des revendications précédentes, **caractérisé en ce que** la bague (14) de séparation d'huile est disposée avec sa périphérie extérieure adjacente au côté intérieur (11a) du corps creux (11) et qu'ainsi au moins une partie de l'écoulement de gaz (12) puisse être déviée radialement vers l'intérieur par la bague (14) de séparation d'huile.

7. Dispositif (1) de séparation d'huile selon l'une des revendications précédentes, **caractérisé en ce que** le feutre (19) présente une perméabilité aux gaz définie de telle sorte que l'écoulement de gaz (13) puisse traverser au moins en partie le feutre (19).

8. Dispositif (1) de séparation d'huile selon l'une des revendications précédentes, **caractérisé en ce qu'**un autre corps (21) de séparation d'huile disposé en aval de la bague (14) de séparation d'huile est prévu dans le corps creux (11).

9. Dispositif (1) de séparation d'huile selon la revendication 8, **caractérisé en ce que** l'autre corps (21) de séparation d'huile a une forme tubulaire et est inséré dans le corps creux (11).

10. Dispositif (1) de séparation d'huile selon les revendications 8 ou 9, **caractérisé en ce qu'**en aval du corps (15) de guidage d'écoulement est disposé un corps de déviation (22) par lequel l'écoulement de gaz (13) peut être dévié vers le côté intérieur de l'autre corps tubulaire (21) de séparation d'huile.

11. Dispositif (1) de séparation d'huile selon l'une des revendications 8 à 10, **caractérisé en ce qu'**un élément intermédiaire (23) est placé entre la bague (14) de séparation d'huile et le corps de déviation (22), l'élément intermédiaire (23) présentant des fentes radiales (24) par lesquelles l'écoulement de gaz (12) peut venir aboutir en particulier de manière accélérée contre le côté intérieur de l'autre corps (21) de séparation d'huile.
